# EUROPEAN PATENT APPLICATION

(11) **EP 4 160 734 A1**
(43) Date of publication of application: **05.04.2023**
(21) Application number: 21814362.6
(22) Date of filing: 08.04.2021
(51) Int. Cl.: H01M 4/134, H01M 10/052, H01M 10/0567, H01M 10/0568

(54) **LITHIUM SECONDARY CELL AND NON-AQUEOUS ELECTROLYTE USED FOR SAME**

(30) Priority: 29.05.2020 JP 2020094323
(71) Applicant: Panasonic Intellectual Property Management Co., Ltd., Osaka-shi, Osaka 540-6207 (JP)
(72) Inventor: TERADA, Shoshi, Osaka-shi, Osaka 540-6207 (JP); KANO, Akira, Osaka-shi, Osaka 540-6207 (JP)
(74) Representative: Novagraaf International SA
(86) International application number: PCT/JP2021/014951
(87) International publication number: WO 2021/241028

(57) **Abstract**

A lithium secondary battery includes a positive electrode, a negative electrode, a separator disposed between the positive electrode and the negative electrode, and a nonaqueous electrolyte. In the negative electrode, lithium metal deposits during charging and the lithium metal dissolves during discharging. The nonaqueous electrolyte includes a lithium ion, a cation of a metal M1 that forms an alloy with lithium, and a halide ion.

## Description

### [Technical Field]

The present disclosure relates to a lithium secondary battery and a nonaqueous electrolyte used for the lithium secondary battery.

### [Background Art]

Lithium ion secondary batteries are known as a high capacity secondary batteries. In lithium ion secondary batteries, a carbon material is used for, for example, a negative electrode active material. The carbon material performs charge/discharge by reversibly intercalating and de-intercalating lithium ions.

Meanwhile, lithium secondary batteries (also referred to as lithium metal secondary batteries) that use lithium metal as the negative electrode active material have an even higher theoretical capacity density. In lithium secondary batteries, lithium metal deposits during charging process on the negative electrode current collector, and the deposited lithium metal during the discharge process dissolves into the nonaqueous electrolyte.

However, in lithium secondary batteries, it is difficult to control the form of lithium metal deposition. When the lithium metal deposits in a dendritic form, the specific surface area of the negative electrode increases, and side reactions with the nonaqueous electrolyte increase. Also, inactive lithium that cannot contribute to charge/discharge generates, causing decrease in discharge capacity.

Patent Literature 1 has proposed a nonaqueous electrolyte battery including a positive electrode having an active material containing lithium, a negative electrode having an active material capable of doping/de-doping metal in an ionic state and/or depositing/dissolving the above-described metal, and a nonaqueous electrolyte containing an electrolytic salt, wherein to the above-described nonaqueous electrolyte, an additive is added, the additive having a higher oxidation-reduction potential than the potential of the above-described metal when deposits on the above-described negative electrode, and having a lower oxidation-reduction potential than the above-described positive electrode active material in a charged state. For the above-described additive, lithium iodide is also mentioned. When the lithium metal deposited to the negative electrode is insulated from the negative electrode and does not contribute to charge/discharge, the additive causes oxidization and ionization of the lithium metal that does not contribute to charge/discharge to prevent deterioration of charge/discharge cycle characteristics.

Patent Literature 2 has proposed a nonaqueous electrolyte secondary battery including a positive electrode having a positive electrode current collector and a positive electrode mixture layer formed on the current collector, a negative electrode having a negative electrode current collector, and a nonaqueous electrolyte, wherein lithium metal deposits on the negative electrode current collector during charging, and the lithium metal dissolves in the nonaqueous electrolyte during discharging, and the nonaqueous electrolyte includes a lithium salt of an anion as an oxalate complex. By adding the lithium salt of an anion of an oxalate complex into the nonaqueous electrolyte, the lithium metal homogeneously deposits on the negative electrode, and expansion of the negative electrode is suppressed particularly.

### [Citation List]

### [Patent Literature]

PLT1: Japanese Laid-Open Patent Publication No. 2003-243030
PLT2: WO2018/179782

### [Summary of Invention]

The methods proposed by Patent Literatures 1 and 2 are insufficient for improving charge/discharge cycle characteristics of lithium secondary batteries.

An aspect of the present disclosure relates to a lithium secondary battery including a positive electrode, a negative electrode, a separator disposed between the positive electrode and the negative electrode, and a nonaqueous electrolyte, wherein in the negative electrode, lithium metal deposits during charging and the lithium metal dissolves during discharging, and the nonaqueous electrolyte includes a lithium ion, a cation of a metal M1 that forms an alloy with lithium, and a halide ion.

Another aspect of the present disclosure relates to a nonaqueous electrolyte for a lithium secondary battery including a lithium ion, a cation of a metal M1 that forms an alloy with lithium, and a halide ion.

The present disclosure can improve charge/discharge cycle characteristics of lithium secondary batteries.

### [Brief Description of Drawings]

[FIG. 1]

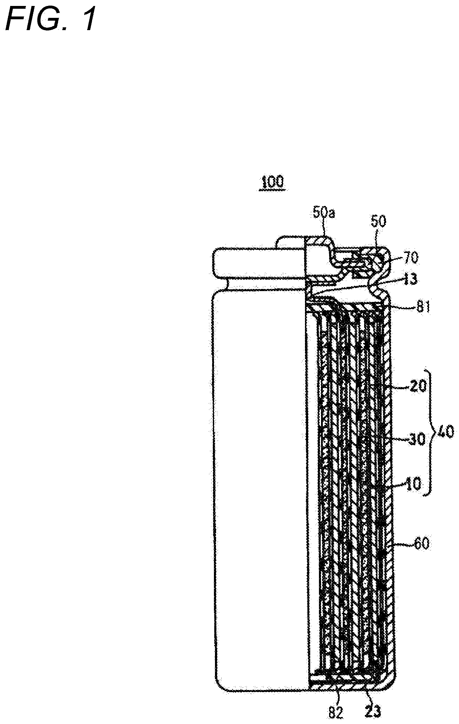

FIG. 1 is a partially cutaway schematic cross sectional view of an example of the lithium secondary battery of the present disclosure.

### [Description of Embodiments]

The lithium secondary battery of the present disclosure includes a positive electrode, a negative electrode, a separator disposed between the positive electrode and the negative electrode, and a nonaqueous electrolyte. In the negative electrode, lithium metal deposits during charging and the lithium metal dissolves during discharging. Specifically, the negative electrode has at least a negative electrode current collector, and lithium metal deposits on the negative electrode current collector. The lithium secondary battery of the present disclosure is also referred to as a lithium metal secondary battery.

In lithium (metal) secondary batteries, for example, 70% or more of the rated capacity is brought out by deposition and dissolution of lithium metal. Transferring of electrons in the negative electrode during charging and during discharging is mainly due to deposition and dissolution of lithium metal in the negative electrode. Specifically, 70 to 100% (e.g., 80 to 100% or 90 to 100%) of transferring of electrons (in another aspect, electric current) during charging and during discharging in the negative electrode is due to deposition and dissolution of lithium metal. That is, the negative electrode of this embodiment is different from the negative electrode in which transferring of electrons during charging and during discharging in the negative electrode is mainly due to storing and releasing of lithium ions by the negative electrode active material (graphite, etc.).

The nonaqueous electrolyte includes a lithium ion, a cation of a metal M1 that forms an alloy with lithium, and a halide ion.

When the nonaqueous electrolyte includes the cation of the metal M1 that forms an alloy with lithium, a region (hereinafter, also referred to as a dope region) is formed, in which the metal M1 is doped to the lithium metal deposited to the negative electrode during initial state of charging. It is assumed that when charging continues, the lithium metal deposits mainly between a thin layer (hereinafter, also referred to as a dope layer M1) formed in the dope region and the negative electrode current collector. As a result, the lithium metal is pressed by the dope layer M1. It is considered that the effect of this pressing suppresses elongation of the dendritic deposition, and suppresses side reactions and reduction in discharge capacity. Thus, charge/discharge cycle characteristics of lithium secondary battery are improved.

However, during charging, pointy deposits may be produced any time on the negative electrode. Dendritic deposits of lithium metal elongate with the pointy deposits as a core. If the pointy deposits (hereinafter, also referred to as a dendrite precursor) are left unattended, suppression of the dendritic deposits will become difficult.

When the nonaqueous electrolyte includes halide ions, the dendrite precursor can be dissolved (oxidized) by redox reaction. The dissolving of the dendrite precursor by halide ions makes the lithium metal surface even more flat. Furthermore, halide ions also dissolve the dendritic deposits, and therefore even if the dendritic deposits are produced, elongation thereof can be suppressed.

When the halide ion dissolves (oxidates) the dendrite precursor, the halide ion itself is reduced. When the reduced halide ion transfers to the positive electrode side and reacts with the positive electrode active material, the positive electrode active material is reduced (discharged), and the halide ion is oxidized to its original state. When the halide ion excessively repeats this reaction, self-discharge progresses in the positive electrode, and storage characteristics of the lithium secondary battery deteriorate. In this regard, not only halide ions react with dendritic lithium having a large specific surface area with priority, when the dope layer M1 is present, reactions between halide ions and excellently deposited lithium metal are suppressed by the dope layer M1, and therefore the self-discharge of the positive electrode does not easily progress. Thus, cycle characteristics are improved, and the deterioration of storage characteristics is suppressed.

Preferable examples of halogen from where the halide ion originates include fluorine (F), chlorine (Cl), bromine (Br), and iodine (I). These may be used singly, or two or more kinds may be used in combination. In terms of the significant effects of dissolving in particular the dendrite precursor or dendritic deposits, at least one of bromine and iodine is preferable, and iodine is the most preferable.

An alloy of the metal M1 and lithium may be formed in the negative electrode as the dope region during the initial period of charging. In this case, it is considered that the lithium metal deposits between the dope layer M1 (hereinafter, also referred to as an alloy layer M1) formed mainly of alloy and the negative electrode current collector. It is considered that the alloy layer M1 is a stable layer out of the dope layer M1, and presses lithium metal more stably.

The metal M1 is at least one selected from the group consisting of In, Sn, Au, Ag, Pt, Zn, Sb, Bi, Si, and Mg. These metals M1 can react with lithium during the initial period of charging and form the alloy layer M1. In particular, the metal M1 is at least one of Sn and Au. Sn and Au are effective in the improvement in charge/discharge cycle characteristics.

In the nonaqueous electrolyte, a concentration of cation of the metal M1 is not particularly limited, and is, for example, 0.5 mmol/L or more and 100 mmol/L or less, or 5 mmol/L or more and 50 mmol/L or less. When the metal M1 is used in the above-described range, a sufficient dope region necessary for the lithium metal is formed. However, in the battery, cations of the metal M1 are used for reaction with lithium for the formation of the dope region (e.g., alloy layer M1). Therefore, when analyzing the nonaqueous electrolyte taken out from the battery, the metal M1 may have a cation content of less than 0.5 mmol. Meanwhile, the cations of the metal M1 are rarely consumed completely. In view of achieving the effects of the present disclosure, the nonaqueous electrolyte taken out from the battery containing the metal M1 of a detection limit or more will suffice.

Because the dope region of the metal M1 is formed on the lithium metal deposited on the negative electrode, the metal M1 is detected by analysis on the negative electrode. The metal M1 may be detected as an alloy with lithium.

In the nonaqueous electrolyte, the halide ion concentration may be, without limitation, for example, 0.5 mmol/L or more and 100 mmol/L or less, or 5 mmol/L or more and 50 mmol/L or less. When the halide ion is used in the above-described range, significant effects of sufficiently dissolving the dendrite precursor or dendritic deposits can be achieved. However, in the battery, halide ions are used for redox reactions. Therefore, when analyzing the nonaqueous electrolyte taken out from inside the battery, the halide ion content can be less than 0.5 mmol.

The cation of the metal M1 and the halide ion may be derived from a salt represented by a general formula: MXn (hereinafter, referred to as a MXn salt). Here, M represents an atom of the metal M1(or M2), and X represents a halogen atom. The "n" is an integer of, for example, 1 to 4. Specific examples of the MXn salt include InCl₃, InBr₃, InBr, InI₃, InI, SnCl₄, SnBr₄, SnBr₂, SnI₄, SnI₂, AuCl, AuBr, AuI, AgCl, AgBr, AgI, PtI₂, and PtBr₂. Preferably, among these, in terms of easily going through ion dissociation in nonaqueous electrolytes, SnI₄ and AuI are used, more preferably, at least one of SnI₄ and AuI are used.

The nonaqueous electrolyte may further include an oxalate complex anion. The oxalate complex anion derived from, for example, an oxalate complex salt will suffice. The oxalate complex anion decomposes at a higher potential than the other components contained in nonaqueous electrolytes, and forms a thin and homogenous coating on the lithium metal surface. The coating derived from the oxalate complex anion significantly improves storage characteristics of lithium secondary batteries when the halide ion is contained in the nonaqueous electrolyte.

The coating derived from the oxalate complex anion has flexibility. It is assumed that in addition to the dope layer (or alloy layer) M1, by forming a flexible coating derived from the oxalate complex anion, the lithium metal is sufficiently and firmly pressed by the dope layer M1 and the coating. Furthermore, the coating derived from the oxalate complex anion can easily follow the changes in the surface shape when the lithium metal dissolves. That is, the coating is constantly in contact with lithium metal, and the pressing effects are easily brought out. As a result, the generation of the dendrite precursor is significantly suppressed, and by the reduction of the dendrite precursor, the amount of reactions between the dendrite precursor and the halide ion is reduced. It is assumed that these effects together enable the significantly suppressed self-discharge in the positive electrode, and significantly improved storage characteristics of lithium secondary batteries.

The oxalate complex anion is preferably bis oxalate borate anion (BOB anion), and difluoro oxalate borate anion (FOB anion), and in particular, lithium difluoro oxalate borate (LiBOB) is preferable because it forms a stable coating even at a high temperature on the negative electrode surface.

In the nonaqueous electrolyte, the oxalate complex anion concentration may be, without limitation, for example, 50 mmol/L or more and 500 mmol/L or less, 50 mmol/L or more and 300 mmol/L or less, or 80 mmol/L or more and 150 mmol/L or less.

The content of the components in the nonaqueous electrolyte is determined, for example, by using a high performance liquid chromatography.

In the following, elements of the lithium secondary battery of the present disclosure are described in detail.

### (Positive Electrode)

The positive electrode includes a positive electrode active material. The positive electrode generally includes a positive electrode current collector, and a positive electrode mixture supported on the positive electrode current collector. The positive electrode mixture may contain the positive electrode active material as an essential component, and may contain a binder, a thickener, and a conductive agent as optional components. The positive electrode includes, generally, a layered positive electrode mixture (hereinafter, referred to as a positive electrode mixture layer) supported on the positive electrode current collector. The positive electrode mixture layer can be formed by applying a positive electrode slurry in which the elements of the positive electrode mixture are dispersed in a dispersion medium on a surface of the positive electrode current collector, and drying the slurry. The dried coating film may be rolled, if necessary.

For the positive electrode active material, for example, a lithium transition metal composite oxide having a layered rock salt type structure is used. In particular, a lithium transition metal composite oxide including Ni, Co, and at least one of Al and Mn (hereinafter, also referred to as composite oxide NC) is promising because it can bring out a high capacity and a high voltage.

The composite oxide NC has a composition represented by, for example, Li_{α}Ni_{(1-x1-x2-x3-y)}Coₓ₁Mnₓ₂Alₓ₃M_{y}O_{2+β} (0.95 ≤ α < 1.05, 0.5 ≤ 1-x1-x2-x3-y ≤ 0.95, 0 < x1 ≤ 0.04, 0 ≤ x2 ≤ 0.1, 0 ≤ x3 ≤ 0.1, 0 < x2 + x3 ≤ 0.2, 0 ≤ y ≤ 0.1,-0.05 ≤ β ≤ 0.05). However, M is at least one selected from the group consisting of Ti, Zr, Nb, Mo, W, Fe, Zn, B, Si, Mg, Ca, Sr, and Y. The (1-x1-x2-x3-y) representing a Ni ratio (atomic ratio) preferably satisfies, in view of a higher capacity, 0.8 ≤ 1-x1-x2-x3-y ≤ 0.95, and more preferably satisfies 0.9 ≤ 1-x1-x2-x3-y ≤ 0.95.

Examples of the binder include fluorine resin (e.g., polytetrafluoroethylene, polyvinylidene fluoride), polyolefin resin (e.g., polyethylene, polypropylene), polyamide resin (e.g., aramid resin), polyimide resin (e.g., polyimide, polyamideimide), acrylic resin (e.g., polyacrylic acid, polymethacrylic acid, acrylic acid-methacrylic acid copolymer, ethylene-acrylic acid copolymer, or a salt thereof), vinyl resin (e.g., polyvinyl acetate), and rubber materials (e.g., styrene-butadiene copolymer rubber (SBR)).

Examples of the thickener include cellulose derivatives such as cellulose ether. Examples of the cellulose derivative include CMC and derivatives thereof, and methyl cellulose. The CMC derivative also includes CMC salt. Examples of the salt include alkali metal salt (e.g., sodium salt), and ammonium salt.

Examples of the conductive agent include electrically conductive fiber and electrically conductive particles. Examples of the electrically conductive fiber include carbon fiber, carbon nanotube, and metal fiber. Examples of the electrically conductive particles include electrically conductive carbon (carbon black, graphite, etc.), and metal powder.

The positive electrode current collector is selected in accordance with the type of the nonaqueous electrolyte secondary battery. For the positive electrode current collector, a metal foil may be used. Examples of the material of metal foil may be, for example, stainless steel, aluminum, aluminum alloy, titanium, or the like. The thickness of the positive electrode current collector is not particularly limited, but may be, for example, 1 to 50 µm, or 5 to 30 µm.

### (Negative Electrode)

The negative electrode includes a negative electrode current collector. During charging, lithium metal deposits on the negative electrode current collector, and during discharging, the lithium metal dissolves. The lithium ion forming the lithium metal is supplied from the nonaqueous electrolyte, and the lithium ion is supplied from the positive electrode to the nonaqueous electrolyte. The negative electrode may include a lithium ion storage layer (layer that exhibits a capacity by storage and release of lithium ions by the negative electrode active material (graphite, etc.)) supported on the negative electrode current collector. In this case, the open circuit potential of the negative electrode in a fully charged state relative to lithium metal (dissolution and deposit potential of lithium) is 70 mV or less. When the open circuit potential of the negative electrode relative to lithium metal in a fully charged state is 70 mV or less, the lithium metal is present at the lithium ion storage layer surface in a fully charged state. That is, the negative electrode exhibits a capacity by deposition and dissolution of lithium metal.

Here, "fully charged" means, when the rated capacity of a battery is regarded as C, for example, a state in which the battery is charged until the state of charge of 0.98 × C or more. The open-circuit potential of the fully charged negative electrode may be measured by decomposing a fully charged battery in an argon-atmosphere to take out the negative electrode, and assembling a cell with a lithium metal as a counter electrode. The composition of the nonaqueous electrolyte of the cell may be the same as the nonaqueous electrolyte in the decomposed battery.

The lithium ion storage layer is formed from a negative electrode mixture including a negative electrode active material into a layer. The negative electrode mixture may include, other than the negative electrode active material, a binder, a thickener, a conductive agent, and the like.

Examples of the negative electrode active material include a carbon material, a Si-containing material, and a Sn-containing material. The negative electrode may include one type of negative electrode active material, or two or more types can be used in combination. Examples of the carbon material include graphite, graphitizable carbon (soft carbon), and non-graphitizable carbon (hard carbon).

For the binder, conductive agent, and the like, for example, those exemplified for the positive electrode may be used. The shape and the thickness of the negative electrode current collector can be selected from those shapes and ranges explained for the positive electrode current collector. For the material of the negative electrode current collector (metal foil), stainless steel, nickel, nickel alloy, copper, copper alloy can be exemplified.

### (Nonaqueous Electrolyte)

The nonaqueous electrolyte includes nonaqueous electrolytes in a liquid state (i.e., nonaqueous liquid electrolytes), gel electrolytes, and solid electrolytes, and excludes an aqueous solution electrolyte. The gel electrolyte may be an electrolyte without flowability, composed of a nonaqueous liquid electrolyte and a gellation agent or a matrix material. The nonaqueous electrolyte includes a nonaqueous solvent, a lithium salt dissolved in the nonaqueous solvent, and an additive. The cation of the metal M1 is included in the additive. The halide ion is included in the additive, also in the case when it is derived from lithium salts. The oxalate complex anion is included in the additive, also in the case when it is derived from lithium salts.

Examples of the nonaqueous solvent composing the nonaqueous electrolyte include cyclic carbonate, chain carbonate, cyclic carboxylate, chain carboxylate, and chain ether. Examples of the cyclic carbonate include propylene carbonate (PC) and ethylene carbonate (EC). Examples of the chain carbonate include diethyl carbonate (DEC), ethyl methyl carbonate (EMC), and dimethyl carbonate (DMC). Examples of the cyclic carboxylate include γ-butyrolactone (GBL) and γ-valerolactone (GVL). Examples of the chain carboxylate include methyl formate, ethyl formate, propyl formate, methyl acetate (MA), ethyl acetate, propyl acetate, methyl propionate, ethyl propionate, and propyl propionate. Examples of the chain ether include dialkyl ether and difluoro alkyl ether having a number of carbon atoms 1 to 4. The nonaqueous solvent may be used singly, or two or more types may be used in combination.

Examples of the lithium salt composing the nonaqueous electrolyte include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylate, boric acid salt, and imide salt. Examples of the boric acid salt include lithium bis(1,2-benzene diolate (2-)-O,O') borate, lithium bis(2,3-naphthalene diolate (2-)-O,O') borate, lithium bis(2,2'-biphenyl diolate (2-)-O,O') borate, and lithium bis(5-fluoro-2-olate-1-benzene sulfonic acid-O,O') borate. Examples of the imide salt include lithium bis fluoro sulfonyl imide (LiN(FSO₂)₂) (hereinafter, also referred to as LiFSI), lithium bis trifluoro methane sulfonic acid imide (LiN(CF₃SO₂)₂), lithium trifluoro methane sulfonic acid fluoro sulfonyl imide (LiN(CF₃SO₂) (FSO₂)), lithium trifluoro methane sulfonic acid nonafluoro butane sulfonic acid imide (LiN(CF₃SO₂) (C₄F₉SO₂)), and lithium bis pentafluoro ethane sulfonic acid imide (LiN(C₂F₅SO₂)₂). The nonaqueous electrolyte may include a kind of lithium salt singly, or two or more kinds thereof may be used in combination.

The lithium salt concentration in the nonaqueous electrolyte is, for example, 0.5 mol/L or more and 2 mol/L or less.

### (Separator)

Usually, it is desirable to interpose a separator between the positive electrode and the negative electrode. The separator has excellent ion permeability and suitable mechanical strength and electrically insulating properties. The separator may be, for example, a microporous thin film, a woven fabric, or a nonwoven fabric, or at least two laminates selected from these can be used. Preferably, the separator material is polyolefin (e.g., polypropylene, polyethylene).

### (Others)

In an example structure of the lithium secondary battery, an electrode group and a nonaqueous electrolyte are accommodated in an outer package, and the electrode group has a positive electrode and a negative electrode wound with a separator interposed therebetween. Alternatively, instead of the wound-type electrode group, other forms of electrode groups may be applied, such as a laminated electrode group in which the positive electrode and the negative electrode are laminated with a separator interposed therebetween. The lithium secondary battery may be any shape of, for example, a cylindrical shape, a rectangular shape, a coin-shape, a button shape, or a laminate shape.

FIG. 1 schematically shows an example configuration of the lithium secondary battery of the present disclosure, with a partially cutaway cross sectional view. As shown in FIG. 1, a lithium secondary battery 100 is a cylindrical secondary battery.

The lithium secondary battery 100 is a wound type battery, and includes a wound electrode group 40 and a nonaqueous electrolyte. The electrode group 40 includes a strip positive electrode 10, a strip negative electrode 20, and a separator 30. The separator 30 is disposed between the positive electrode 10 and the negative electrode 20. A positive electrode lead 13 is connected to the positive electrode 10. A negative electrode lead 23 is connected to the negative electrode 20.

One end of the positive electrode lead 13 is connected to the positive electrode 10, and the other end thereof is connected to a sealing body 50. The sealing body 50 includes a positive electrode terminal 50a. Usually, the sealing body 50 includes a mechanism that works as a safety valve when the internal pressure of the battery increases.

One end of the negative electrode lead 23 is connected to the negative electrode 20, and the other end thereof is connected to the bottom of a case (case main body) 60. The case 60 works as a negative electrode terminal. The case 60 is a bottomed cylindrical can. The case 60 is made of metal, for example, iron. Generally, nickel plating is applied to the inner face of the iron-made case 60. To the upper portion and the lower portion of the electrode group 40, a resin-made upper insulating ring 81 and a lower insulating ring 82 are disposed, respectively. An electrode group 40 and a nonaqueous electrolyte are accommodated inside the case 60. The case 60 is sealed with the sealing body 50 and a gasket 70.

### [Examples]

In the following, the present disclosure will be described in detail based on Examples and Comparative Examples, but the present invention is not limited to Examples below.

### <Examples 1 to 4 and Comparative Examples 1 to 4>

The lithium secondary battery was made and evaluated based on the following procedures.

### (1) Production of positive electrode

100 parts by mass of positive electrode active material particles (composition: LiNi_{0.9}Co_{0.05}Al_{0.05}O₂), 1 part by mass of acetylene black, 1 part by mass of polyvinylidene fluoride, and a suitable amount of N-methyl-2-pyrrolidone (NMP) were mixed, thereby producing a positive electrode slurry. Next, the positive electrode slurry was applied to one surface of the aluminum foil, the coating was dried and then rolled to form a positive electrode mixture layer (thickness 95 µm, density 3.6 g/cm³) on both surfaces of the aluminum foil, thereby producing a positive electrode.

### (2) Production of negative electrode

The negative electrode was made by cutting an electrolytic copper foil (thickness 10 µm) into a predetermined electrode size.

### (3) Preparation of nonaqueous electrolyte

To a nonaqueous solvent mixture including DME(dimethoxyethane) and 1,1,1-trifluoro ethyl-2,2,3,3-tetrafluoro ethyl ether at a volume ratio of 1:3, LiN(FSO₂)₂ (i.e., LiFSI) was dissolved at a concentration of 1 mol /L, and the additive (MXn salt (AuI, SnI₄, LiI), LiFOB) shown in Tables 1 and 2 are dissolved at a concentration shown in Tables 1 and 2, thereby preparing a nonaqueous electrolyte. LiFOB was lithium difluoro oxalateborate.

### (4) Production of lithium secondary battery

An aluminum-made tab was attached to the positive electrode, and a nickel-made tab was attached to the negative electrode. Next, the positive electrode, the negative electrode, and the separator were disposed so that the separator was interposed between the positive electrode and the negative electrode, and they were wound at once into a spiral shape. The wound electrode group was accommodated in a bag outer case formed of a laminate sheet including an aluminum layer. A nonaqueous electrolyte was injected into the outer case, and then the outer case was sealed, thereby producing a lithium secondary battery (evaluation cell).

### (5) Battery evaluation

### (Charge/discharge cycle characteristics)

In a 25°C temperature environment, the evaluation cell was subjected to constant current charging at a current of 0.3 It until the voltage reached 4.1 V, and thereafter, subjected to constant voltage charging at a constant voltage of 4.1 V until the electric current reached 0.05 It. Then, the cell was subjected to constant current discharging at a current of 0.3 It until the voltage reached 2.5 V. This set of charge/discharge cycle was repeated to 100 cycles, and the ratio of the 100th cycle discharge capacity relative to the 1st cycle discharge capacity was determined as a capacity retention rate (R₁₀₀). Table 1 shows the results. The cells A1 to A4 correspond to Examples, and the cells B1 to B3 correspond to Comparative Examples.

**[Table 1]**

| Cell | MXn salt (50mmol) | LiFOB (mmol) | R₁₀₀(%) |
|---|---|---|---|
| A1 | AuI | 0 | 72.9 |
| A2 | Aul | 100 | 77.0 |
| A3 | SnI₄ | 0 | 73.1 |
| A4 | SnI₄ | 100 | 73.5 |
| B1 | Lil | 0 | 68.2 |
| B2 | Not used | 0 | 63.8 |
| B3 | Not used | 100 | 60.8 |

Table 1 shows that when the nonaqueous electrolyte including the MXn salt is used, the capacity retention rate significantly improves compared with Comparative Examples.

### (Storage characteristics)

In a 25°C temperature environment, some of the evaluation cells were subjected to constant current charging at a current of 0.3 It until the voltage reached 4.1 V, and thereafter, subjected to constant voltage charging at a constant voltage of 4.1 V until the electric current reached 0.05 It. Then, the cell in a charged state was stored for 10 days at 25°C, and thereafter, constant current discharging was performed at a current of 0.3 It until the voltage reached 2.5 V. The ratio of the discharge capacity after 10 days storage relative to the above-described discharge capacity at the 1st cycle was determined as a capacity retention rate (R_{St25}) after storage. Table 2 shows the result. The cell B4 corresponds to Comparative Example.

**[Table 2]**

| Cell | MXn salt (50mmol) | LiFOB (mmol) | Rₛₜ₂₅(%) |
|---|---|---|---|
| A2 | Aul | 100 | 74.5 |
| A4 | SnI₄ | 100 | 87.2 |
| B4 | LiI | 100 | 22.5 |

Table 2 shows that when the MXn salt is used with LiFOB, particularly excellent storage characteristics can be achieved, and with or without the presence of the cation of the metal M1 other than lithium results in totally different storage characteristics.

### [Industrial Applicability]

The present disclosure can be applied to lithium secondary batteries.

### [Reference Signs List]

- 10: Positive Electrode
- 13: Positive Electrode Lead
- 20: Negative Electrode
- 23: Negative Electrode Lead
- 30: Separator
- 40: Electrode Group
- 50: Sealing body
- 50a: Positive Electrode Terminal
- 60: Case (Case main body)
- 70: Gasket
- 81: Upper Insulation Ring
- 82: Lower Insulation Ring
- 100: Lithium secondary Battery

## Claims

1. A lithium secondary battery comprising a positive electrode, a negative electrode, a separator disposed between the positive electrode and the negative electrode, and a nonaqueous electrolyte, wherein
in the negative electrode, lithium metal deposits during charging and the lithium metal dissolves during discharging, and
the nonaqueous electrolyte includes a lithium ion, a cation of a metal M1 that forms an alloy with lithium, and a halide ion.

2. The lithium secondary battery of claim 1, wherein the metal M1 is at least one selected from the group consisting of In, Sn, Au, Ag, Pt, Zn, Sb, Bi, Si, and Mg.

3. The lithium secondary battery of claim 1 or 2, wherein in the nonaqueous electrolyte, a concentration of the cation of the metal M1 is 100 mmol/L or less.

4. The lithium secondary battery of any one of claims 1 to 3, wherein in the nonaqueous electrolyte, a concentration of the halide ion is 0.5 mmol/L or more and 100 mmol/L or less.

5. The lithium secondary battery of any one of claims 1 to 4, wherein the nonaqueous electrolyte further includes an oxalate complex anion.

6. The lithium secondary battery of any one of claims 1 to 5, wherein in the negative electrode, the lithium metal and the metal M1 form an alloy.

7. A nonaqueous electrolyte for a lithium secondary battery comprising a lithium ion, a cation of a metal M1 that forms an alloy with lithium, and a halide ion.

8. The nonaqueous electrolyte for a lithium secondary battery of claim 7, wherein a concentration of the cation of the metal M1 is 0.5 mmol/L or more and 100 mmol/L or less.

9. The nonaqueous electrolyte for a lithium secondary battery of claim 7 or 8, wherein a concentration of the halide ion is 0.5 mmol/L or more and 100 mmol/L or less.

10. The nonaqueous electrolyte for a lithium secondary battery of any one of claims 7 to 9, further including an oxalate complex anion.
